# FASCICULE DE BREVET EUROPEEN

(11) **EP 0 409 686 B1**
(45) Date de publication et mention de la délivrance du brevet: **03.03.1993**
(21) Numéro de dépôt: 90401903.1
(22) Date de dépôt: 29.06.1990
(51) Int. Cl.: B60B 7/08, F16B 5/06

(54) **Enjoliveur de roue perfectionné**
Radzierblende
Vehicle wheel discs

(30) Priorité: 20.07.1989 FR 8909795
(43) Date de publication de la demande: 23.01.1991
(73) Titulaire: RAPID S.A., F-75852 Paris Cédex 17 (FR)
(72) Inventeur: Dubost, Dominique, F-78170 La celle Saint Cloud (FR)
(74) Mandataire: Durand, Yves Armand Louis

(56) Documents cités:
- EP-A- 0 271 381
- DE-A- 1 575 173
- PATENT ABSTRACTS OF JAPAN vol. 13, no. 299 (M-847)(3647) 11 juillet 1989, & JP-A-01 90802 (KANTO SEIKI) 07 avril 1989,

## Description

La présente invention a essentiellement pour objet un enjoliveur de roue perfectionné.

On connaît déjà, d'après la demande de brevet européen N° 89 402 688.9 déposée le 29 Septembre 1989 et appartenant à la demanderesse, un enjoliveur de roue susceptible d'être fixé de manière amovible dans un redan de la jante de roue d'un véhicule par l'intermédiaire d'une couronne élastiquement déformable clippée dans ledit redan et interrompue pour former au moins deux extrémités libres réunies par au moins un moyen élastiquement déformable, tel que par exemple un fil métallique, permettant la déformation radiale de ladite couronne.

En outre, une barrette amovible pouvait être montée entre les deux extrémités libres de la couronne pour exercer une précontrainte sur celle-ci à l'encontre de la force exercée par le moyen élastiquement déformable de façon à éviter la déformation de l'ensemble enjoliveur-couronne avant montage sur la jante de roue et également pour permettre le montage de cet ensemble par clippage sur la jante après démontage de la barrette.

On comprend donc qu'après montage de l'enjoliveur sur la jante de roue, la barrette devient inutile et constitue un élément perdu. En outre, la barrette exige une fabrication distincte ou séparée des autres éléments de l'enjoliveur. Enfin, le montage de l'enjoliveur sur la jante de roue nécessite une intervention spéciale sur la barrette pour l'extraire de la couronne de l'enjoliveur avant d'effectuer le montage.

Aussi, la présente invention a pour but de remédier à cet inconvénient en proposant un enjoliveur de roue supprimant toute intervention sur la barrette, laquelle ne constitue plus désormais un élément coûteux et perdable.

A cet effet, l'invention a pour objet un enjoliveur de roue susceptible d'être fixé de manière amovible dans un redan de la jante de roue d'un véhicule par l'intermédiaire d'une couronne élastiquement déformable clippée dans ledit redan et interrompue pour former au moins deux extrémités libres réunies par au moins un moyen élastiquement déformable, tel que par exemple un fil métallique, permettant la déformation radiale de ladite couronne, tandis qu'une barrette est prévue entre lesdites deux extrémités libres pour exercer une précontrainte sur la couronne à l'encontre de la force exercée par le moyen élastiquement déformable pour ainsi éviter la déformation de l'ensemble enjoliveur-couronne avant montage sur la jante de roue, caractérisé en ce que ladite barrette vient de matière ou de moulage, par au moins l'une de ses deux extrémités, avec ladite couronne.

On comprend donc que la barrette est intégrale à la couronne et remédie par conséquent à tous les inconvénients ci-dessus.

Suivant un exemple de réalisation, la barrette est flexible et ses deux extrémités viennent de matière ou de moulage avec respectivement les deux extrémités libres de la couronne.

Suivant un autre mode de réalisation, la barrette est sensiblement rigide, vient de moulage par l'une de ses deux extrémités avec une extrémité libre de la couronne et comporte à son autre extrémité un moyen d'accrochage à l'autre extrémité libre de la couronne.

Selon encore un autre mode de réalisation, la barrette précitée se compose de deux portions de barrette sensiblement rigides comportant chacune une première extrémité venant de moulage avec une extrémité libre de la couronne et une deuxième extrémité munie de moyens d'accrochage des deux portions de barrette.

Suivant encore une autre caractéristique de l'inventions les moyens d'accrochage précités sont constitués par des éléments en forme de crochet.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue partielle et en perspective d'un enjoliveur de roue selon cette invention ;
La figure 2 est une demi-vue en plan et de dessous de cet enjoliveur ;
La figure 3 est une vue schématique et de côté d'un autre mode de réalisation de barrette intégrale à la couronne ; et
Les figures 4 et 5 sont des vues schématiques et de côté d'encore un autre mode de réalisation de barrette intégrale à la couronne, respectivement en position d'accrochage, et en position de décrochage.

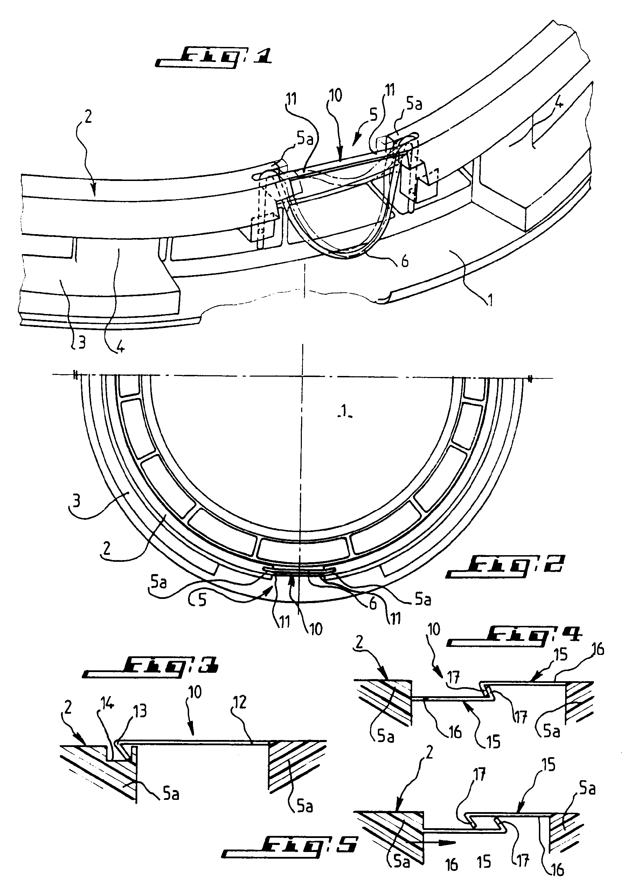

En se reportant aux figures 1 et 2, on voit un enjoliveur de roue qui se compose essentiellement d'un flasque extérieur et décoratif 1, dont est solidaire une couronne 2 permettant la fixation par clippage du flasque 1 dans le redan (non représenté) d'une jante de roue (également non représentée).

La couronne 2 peut être fixée sur le flasque 1 de toute manière appropriée.

Elle peut être intégrale au flasque 1 et venir de moulage avec celui-ci, ou bien elle peut constituer un élément indépendant qui est fixé par collage ou rivetage sur le flasque 1 ou qui est fixé sur ce flasque de manière amovible par l'intermédiaire d'agrafes quelconques, par exemple.

La couronne 2 comporte de préférence une embase 3 solidaire du flasque 1 et reliée à ladite couronne par des pattes ou analogues 4 susceptibles de conférer à la couronne une élasticité radiale.

Comme on le voit bien sur les figures 1 et 2, la couronne 2 comporte une partie interrompue telle que 5, mais elle pourrait, sans sortir du cadre de l'invention, être interrompue à deux niveaux suivant sensiblement son diamètre, bien que cela ne soit pas représenté.

Les deux extrémités libres 5a de la couronne 2 formant l'interruption 5 sont reliées par un fil métallique 6 formant ressort accroché sur lesdites extrémités libres par tout moyen approprié, tel que par exemple un simple orifice.

Conformément à l'invention, les extrémités libres 5a en vis-à-vis sont reliées par une barrette 10 qui vient de moulage ou de matière par au moins l'une de ses deux extrémités, avec la couronne 2, étant entendu qu'en position de repos de l'enjoliveur, la barrette 10 sera tendue de façon à exercer une précontrainte sur la couronne 2 à l'encontre de la force exercée par le fil-ressort 6 tendant à éloigner l'une de l'autre les extrémités libres 5a de ladite couronne.

Suivant l'exemple de réalisation illustré par les figures 1 et 2, la barrette 10 est flexible et ses deux extrémités 11 viennent de moulage avec respectivement les deux extrémités 5a de la couronne 2.

Suivant l'exemple de réalisation représenté sur la figure 3, la barrette 10 est sensiblement rigide, vient de moulage par l'une 12 de ses extrémités avec une extrémité libre 5a de la couronne 2, tandis que l'autre extrémité 13 de la barrette présente une forme de crochet ou analogue susceptible de s'accrocher dans une ouverture 14 ménagée dans l'autre extrémité libre 5a de la couronne 2.

Suivant le mode de réalisation illustré par les figures 4 et 5, la barrette 10 est constituée de deux portions 15 de barrette. Chaque portion de barrette 15 comporte une extrémité 16 venant de moulage avec une extrémité libre 5a de la couronne 2. L'autre extrémité 17 de chaque portion de barrette 15 présente une forme de crochet de façon a procurer l'accrochage des deux portions de barrette 15 lorsque l'enjoliveur est au repos, c'est-à-dire en attente avant montage.

Mais, pour une meilleure compréhension, on décrira ci-après brièvement comment s'effectue la mise en oeuvre de l'enjoliveur.

Tout d'abord, pour ce qui concerne la réalisation visible sur les figures 1 et 2, on rappellera qu'en position de repos ou d'attente de montage, la barrette flexible 10 sera tendue, de façon a exercer une précontrainte sur la couronne 2 à l'encontre de la force exercée par le fil-ressort 6.

Pour monter l'enjoliveur sur la jante de roue, il suffira tout simplement de comprimer la couronne 2 dans le redan annulaire de cette jante, ce qui procurera une certaine compression au fil-ressort 6, et un certain relâchement de la barrette flexible 10, comme on le voit en traits pointillés sur la figure 1. C'est dire qu'en position clippée de l'enjoliveur sur la jante, le fil-ressort 6 et la barrette souple 10 intégrale à la couronne 2 auront sensiblement la position visible en traits pointillés sur la figure 1.

Si l'on se réfère maintenant au mode de réalisation de la figure 3, le fonctionnement indiqué ci-dessus est le même, à cela près que la barrette 10 sensiblement rigide sera accrochée par son extrémité 13 à l'une des deux extrémités libres 5a de la couronne 2, lorsque l'enjoliveur est en position d'attente de montage. Le clippage de l'enjoliveur dans le redan de la jante de roue libèrera automatiquement, par le léger rapprochement des extrémités libres 5a de la couronne 2, l'extrémité 13 en forme de crochet, de l'ouverture 14.

Enfin, pour ce qui est de la variante visible sur la figure 4, le fonctionnement est encore le même que précédemment, sauf que le clippage de l'enjoliveur dans le redan de la jante de roue provoquera tout simplement, comme on le voit sur la figure 5, un éloignement des crochets 17 appartenant aux deux portions de barrette 15, alors que ces deux crochets étaient engagés l'un dans l'autre, comme on le voit sur la figure 4, lorsque l'enjoliveur se trouvait en position d'attente, avant montage.

Bien entendu, l'invention n'est nullement limitée aux modes de réalisation décrits et illustrés qui n'ont été donnés qu'à titre d'exemple.

C'est ainsi que le nombre d'interruptions de la couronne et donc de barrettes 10 intégrales à ladite couronne peut être quelconque, de même que les moyens d'accrochage de l'une des extrémités de la barrette sur la couronne, lorsque cette barrette ne comporte qu'une seule extrémité venant de moulage avec la couronne.

C'est dire que l'invention comprend tous les équivalents techniques des moyens décrits ainsi que leurs combinaisons si celles-ci sont effectuées suivant les revendications.

## Revendications

1. Enjoliveur de roue susceptible d'être fixé de manière amovible dans un redan de la jante de roue d'un véhicule par l'intermédiaire d'une couronne (2) élastiquement déformable clippée dans ledit redan et interrompue (5) pour former au moins deux extrémités libres (5a) réunies par au moins un moyen élastiquement déformable, tel que par exemple un fil métallique (6), permettant la déformation radiale de ladite couronne, tandis qu'une barrette (10) est prévue entre lesdites deux extrémités libres (5a) pour exercer une précontrainte sur la couronne (2) à l'encontre de la force exercée par le moyen élastiquement déformable pour ainsi éviter la déformation de l'ensemble enjoliveur-couronne avant montage sur la jante de roue, caractérisé en ce que ladite barrette (10) vient de matière ou de moulage par au moins l'une de ses deux extrémités (11, 12, 16) avec ladite couronne.

2. Enjoliveur selon la revendication 1, caractérisé en ce que la barrette précitée (10) est flexible et ses deux extrémités (11) viennent de matière ou de moulage avec respectivement les deux extrémités libres (5a) de la couronne (2).

3. Enjoliveur selon la revendication 1, caractérisé en ce que la barrette précitée (10) est sensiblement rigide, vient de moulage par l'une (12) de ses deux extrémités avec une extrémité libre (5a) de la couronne (2) et comporte à son autre extrémité (13) un moyen d'accrochage à l'autre extrémité libre (5a) de la couronne.

4. Enjoliveur selon la revendication 1, caractérisé en ce que la barrette précitée (10) se compose de deux portions de barrette sensiblement rigides (15) comportant chacune une première extrémité (16) venant de moulage avec une extrémité libre (5a) de la couronne (2) et une deuxième extrémité (17) munie de moyens d'accrochage des deux portions de barrette (15).

5. Enjoliveur selon la revendication 3 ou 4, caractérisé en ce que les moyens d'accrochage précités sont constitués par des éléments en forme de crochet.

## Patentansprüche

1. Radzierkappe, die fähig ist, in einem Absatz der Radfelge eines Fahrzeugs in abnehmbarer Weise befestigt zu werden, über einen elastisch verformbaren, in dem besagten Absatz eingeklemmten Ring (2), der unterbrochen (5) ist, um wenigstens zwei durch wenigstens ein die radiale Verformung des besagten Ringes gestattendes, elastisch verformbares Mittel, wie zum Beispiel einen Draht (6) verbundene, freie Enden (5a) zu bilden, während eine Leiste (10) zwischen den besagten beiden freien Enden (5a) vorgesehen ist, um eine Vorspannung auf den Ring (2) entgegen der durch das elastisch verformbare Mittel ausgeübten Kraft auszuüben, um somit die Verformung der Zierkappe-Ring-Gesamtheit vor dem Einbau an der Radfelge zu vermeiden, dadurch gekennzeichnet, dass die besagte Leiste (10) mit wenigstens einem ihrer beiden Enden (11, 12, 16) werkstoffsmässig einstückig beziehungsweise durch Formgiessen mit dem besagten Ring hergestellt ist.

2. Zierkappe gemäss Anspruch 1, dadurch gekennzeichnet, dass die vorgenannte Leiste biegsam ist und ihre beiden Enden (11) werkstoffsmässig einstückig beziehungsweise durch Formgiessen jeweils mit den beiden freien Enden (5a) des Ringes (2) hergestellt ist.

3. Zierkappe nach Anspruch 1, dadurch gekennzeichnet, dass die vorgenannte Leiste (10) im wesentlichen starr, mit einem (12) ihrer beiden Enden einstückig durch Formgiessen mit einem freien Ende (5a) des Ringes (2) hergestellt ist und an ihrem anderen Ende (13) ein Mittel zum Anhaken an dem anderen freien Ende (5a) des Ringes aufweist.

4. Zierkappe nach Anspruch 1, dadurch gekennzeichnet, dass die vorgenannte Leiste (10) sich aus im wesentlichen starr Leistenteilen (15) zusammensetzt, die jeweils ein erstes einstückig durch Formgiessen mit dem freien Ende (16) des Ringes (2) hergestelltes Ende (16) und ein zweites mit Mitteln zum Verhaken der beiden Leistenteile (15) versehenes Ende (17) aufweist,

5. Zierkappe nach Anspruch 3 oder 4, dadurch gekennzeichnet, dass die vorgenannten Anhakungsmittel durch hakenförmige Elemente gebildet werden.

## Claims

1. Ornamental wheel hub cap capable of being removably fastened into a stepped portion of the wheel rim of a vehicle through the medium of an elastically deformable ring (2) clipped into the said stepped portion and interrupted (5) to form at least two free ends (5a) joined together by at least one elastically deformable means such for example as a wire (6) permitting the radial deformation of the said ring whereas a strap (10) is provided between the said two free ends (5a) for exerting a prestress upon the ring (2) against the force exerted by the elastically deformable means to thus avoid the deformation of the ornamental hub cap-ring assembly before the mounting onto the wheel rim, characterized in that the said strap (10) is made integral in one piece of material or by moulding at at least one of its two ends (11,12, 16) with the said ring.

2. Ornamental cap according to claim 1, characterized in that the aforesaid strap (10) is flexible and its two ends (11) are made integral in one piece of material or through moulding with both free ends (5a), respectively, of the ring (2).

3. Ornamental cap according to claim 1, characterized in that the aforesaid strap (10) is substantially rigid, is made integral through moulding at one (12) of its two ends with one free end (5a) of the ring (2) and comprises at its other end (13) a means for being hooked onto the other free end (5a) of the ring.

4. Ornamental cap according to claim 1, characterized in that the aforesaid strap (10) consists of two substantially rigid strap portions (15) comprising each one a first end (16) made integral through moulding with one free end (5a) of the ring (2) and a second end (17) provided with means for hooking both strap portions (15).

5. Ornamental cap according to claim 3 or 4, characterized in that the aforesaid hooking means consist of hook-shaped elements.
